Europäisches Patentamt

European Patent Office

Office européen des brevets

(11) Publication number: **0 351 439 B1**

(19)

(12) **EUROPEAN PATENT SPECIFICATION**

(45) Date of publication of patent specification: **14.10.92**  (51) Int. Cl.⁵: **F16L  37/22**

(21) Application number: **88111515.8**

(22) Date of filing: **18.07.88**

(54) **Quick-acting coupling of the ball-catch type.**

(43) Date of publication of application:
**24.01.90 Bulletin  90/04**

(45) Publication of the grant of the patent:
**14.10.92 Bulletin  92/42**

(84) Designated Contracting States:
**AT BE CH DE ES FR GB GR IT LI LU NL SE**

(56) References cited:
**DE-A- 3 607 088**
**DE-B- 1 181 997**
**DE-U- 1 953 842**
**FR-A- 2 406 149**
**US-A- 2 919 935**

(73) Proprietor: **NITODAN A/S**
**4, H.C. Orstedsvej**
**DK-6100 Haderslev(DK)**

(72) Inventor: **Meeske, Jorn**
**46, Bellahojvej**
**DK-6000 Kolding(DK)**

(74) Representative: **Sparing Röhl Henseler Paten-**
**tanwälte European Patent Attorneys**
**Rethelstrasse 123**
**W-4000 Düsseldorf 1(DE)**

## Description

The present invention relates to a quick-acting coupling of the ball-catch type for a precise positioning and fixing of the nipple member inserted in the coupling.

Quick-acting couplings of the ball-catch type have been known for many years, cf. for instance US-PS No. 2,919,935. Previously these couplings were mainly used for interconnecting two hoses or a tube and a hose. The couplings are very suited for this purpose because the nipple member inserted in the coupling housing is capable of compensating a turning of the hose by being turnable in the coupled state. The latter effect has in turn been achieved by sufficiently high tolerances between the coupling housing, the nipple member, and the balls.

Compared to the above couplings the so-called claw clutches or bayonet clutches present a more rigid coupling, and usually they can also be used for considerably higher pressures than the common quick-acting couplings of the ball-catch type. However, these clutches can only be coupled in a predetermined fixed position, and usually they are of considerable outer dimensions with the result that they appear rather clumsy.

The object of the present invention is to provide a quick-acting coupling of the ball-catch type and of small outer dimensions even for rather high pressures, which is very simple and in addition capable of fixedly retaining the nipple member in a predetermined position, involving no play in radial direction. The latter is of great importance in cases where the nipple member is mounted for instance in a long tube and under high pressure, as for instance a play of 1 mm in the coupling housing causes a considerable play at the end of the tube, the latter being completely unacceptable in some cases.

The above object is according to the invention obtained by a quick-acting coupling being characterised in that the coupling housing is provided with a ring adjacent the end of insertion for radial fixation of the nipple member, said ring being situated in a ring groove, and that the fixing ring radially retaining the nipple member is spaced from the sealing ring a distance larger than the radius of the nipple member, and in that the coupling housing and the nipple member are provided with positioning means retaining them in predetermined mutual positions in the circumferential direction. In this manner the positioning means and a fixing ring control the inserted nipple member.

Furthermore, the positioning means may be polygonal, preferably pentagonal or hexagonal, whereby the nipple member can be mounted in the coupling in five to six predetermined permanent positions without play.

The positioning means may also be of the tongue-and-groove type, including splines whereby the nipple member can be mounted in one or more pretedermined permanent positions. The number of positions is only limited by the number of grooves allowed in the circumference of the nipple member.

Moreover the positioning means may be center holes or milled slots co-operating with three or more balls, whereby it is possible to use the balls as positioning means. Then the number of possible coupling positions depends on the number of center holes or milled slots allowed in the nipple member.

The invention is described below with reference to the accompanying drawings, in which

Figure 1 is an axial sectional view of a coupling with hexagonal positioning means in the nipple member and the coupling housing,

Figure 2 corresponds to Figure 1, but here the nipple member has been turned 60° inside the coupling housing and is completely engaged,

Figure 3 is an end view of the embodiments of Figures 1 and 2 without the nipple member,

Figure 4 is an end view of yet another embodiment of the coupling,

Figure 5 is an axial sectional view of a further embodiment.

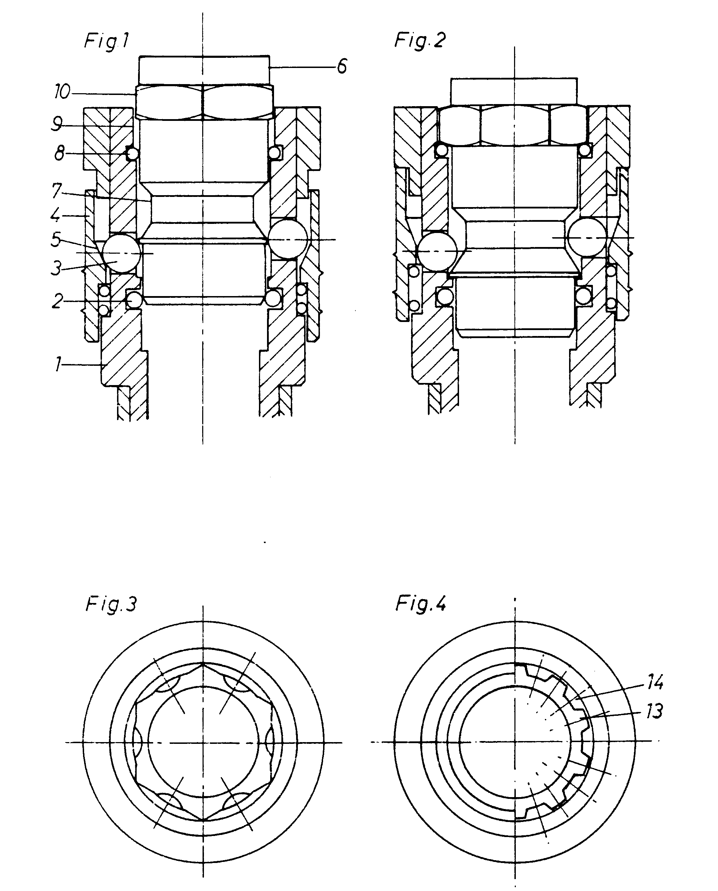

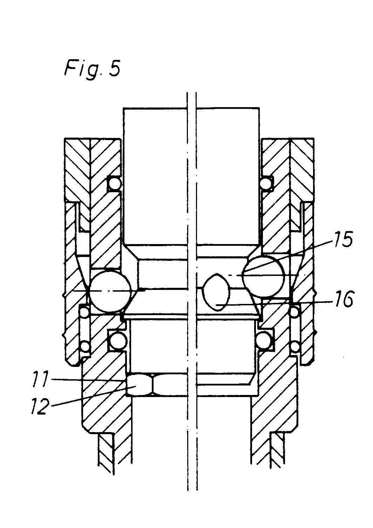

The quick-acting coupling comprises a coupling housing 1 with a sealing ring 2 and coupling balls 3. A coupling and decoupling ring 4 is situated on the outside of the coupling housing. By axially moving the ring 4 by means of the surface 5 said ring influences the balls 3 in radial direction so as to engage the groove 7 in the nipple member 6 and vice versa at the decoupling. The coupling housing is furthermore provided with a fixing ring 8 for retaining the nipple member 6 in radial direction. Both the coupling housing 1 and the nipple member 6 are further provided with polygonal inner 9 and outer 10 positioning means. According to Figure 5 inner 11 and outer 12 positioning means can also be situated somewhere else. Furthermore, according to the embodiment of Figure 4 an outer 13 and inner 14 positioning means can also be a single or multiple tongue-and-groove joint, and they can also be differently positioned. According to the embodiment of Figure 5 the balls 3 can also be used for positioning the nipple member 6 by said balls engaging center holes 16 or milled slots 15 both present in the groove 7.

A highly increased use of for instance high-pressure cleaners, cleaning and spraying chambers as well as painting chambers and automated painting machines has formed the basis of the invention as all these operations involve the use of a quick coupling and decoupling of preferably permanent tubes of a certain length and provided with various tools. As the tubes are usually bend into different shapes so as to discharge a liquid at a predetermined location and always the same location each time the tool is mounted, it is very important to ensure the accurate positioning.

It appears from the above that the quick-acting coupling according to the invention is also suitable in connection with for instance garden watering in case an extension tube is to be coupled to the hose connection, said extension tube comprising various nozzles for instance for spraying fruit gardens, washing windows or cars, flushing etc. Numerous application possibilities exist where a turnable coupling is not desired.

## Claims

1. A quick-acting coupling of the ball-catch type comprising a nipple member (6) and a coupling housing (1) with coupling means allowing insertion of said nipple member (6), which may be positioned and fixed in the coupling housing, which housing further comprises a sealing ring (2) situated after the balls (3) of the coupling when seen from the end of insertion of the nipple member (6), characterized in that the coupling housing (1) is provided with a ring (8) adjacent the end of insertion for radial fixation of the nipple member (6), said ring (8) being situated in a ring groove, and in that the fixing ring (8) radially retaining the nipple member (6) is spaced from the sealing ring (2) a distance larger than the radius of the nipple member (6), and in that the coupling housing (1) and the nipple member (6) are provided with positioning means retaining them in predetermined mutual positions in the circumferential direction.

2. A quick-acting coupling as claimed in claim 1, characterised in that the positioning means are polygonal, preferably pentagonal or hexagonal (9, 10, 11, 12).

3. A quick-acting coupling as claimed in claim 1, characterised in that the positioning means are tongue-and-groove joints (13, 14), including splines.

4. A quick-acting coupling as claimed in claim 1, characterised in that the positioning means are center holes (15) or milled slots (16) co-operating with three or more balls.

## Patentansprüche

1. Schnellkupplung vom Kugelfangtyp, umfassend ein Nippelglied (6) und ein Kupplungsgehäuse (1) mit Kupplungsmitteln, die das Einfügen des Nippelglieds (6) ermöglichen, das in dem Kupplungsgehäuse positioniert und fixiert werden welches Gehäuse ferner einen Dichtring (2) umfaßt, der hinter den Kugeln (3) der Kupplung liegt in Betrachtungsrichtung vom Ende der Einfügung des Nippelgliedes (6), dadurch gekennzeichnet, daß das Kupplungsgehäuse (1) mit einem Ring (8) nahe dem Einfügungsende für die Radialfixierung des Nippelgliedes (6) versehen ist, welcher Ring (8) in einer Ringnut sitzt, und daß der Fixierring (8), der das Nippelglied (6) radial hält, vom Dichtring (2) einen Abstand aufweist, der größer ist als der Radius des Nippelgliedes (6), und daß das Kupplungsgehäuse (1) und das Nippelglied (6) mit Positioniermitteln versehen sind, die sie in vorbestimmter Relativlage in Umfangsrichtung halten.

2. Schnellkupplung nach Anspruch 1, dadurch gekennzeichnet, daß die Positioniermittel polygonal, vorzugsweise pentagonal oder hexagonal (9, 10, 11, 12) sind.

3. Schnellkupplung nach Anspruch 1, dadurch gekennzeichnet, daß die Positioniermittel Nut- und Federverbindungen (13, 14) einschließlich Keilen sind.

4. Schnellkupplung nach Anspruch 1, dadurch gekennzeichnet, daß die Positioniermittel Zentrierlöcher (15) oder gefräste Schlitze (16) sind, die mit drei oder mehr Kugeln zusammenwirken.

## Revendications

1. Raccord rapide du type à loqueteau à billes comprenant un élément de manchon (6) et un logement de raccord (1) avec des moyens de raccord permettant l'introduction de l'élément de manchon (6) qui peut être positionné et fixé dans le logement du raccord, lequel logement de raccord comprend de plus une bague d'étanchéité (2) agencée en aval des billes (3) du raccord en partant de l'extrémité d'introduction de l'élément de manchon (6), caractérisé en ce que le logement de raccord (1) est muni d'une bague (8) contiguë à l'extrémité d'introduction pour la fixation radiale de l'élément de manchon (6), la bague (8) étant logée dans une gorge annulaire et en ce que la bague de fixation (8) maintenant radialement en place l'élément de manchon (6) est espacée par rapport à la bague d'étanchéité (2) d'une distance supérieure au rayon de l'élément de manchon (6) et en ce que le logement de raccord (1) et l'élément de manchon (6) sont munis de moyens de positionnement les maintenant dans des positions réciproques prédéterminées dans la direction circonférentielle.

2. Raccord rapide selon la revendication 1, caractérisé en ce que les moyens de positionnement sont polygonaux, de préférence pentagonaux ou hexagonaux (9, 10, 11, 12).

3. Raccord rapide selon la revendication 1, caractérisé en ce que les moyens de positionnement sont des assemplages à languette et à gorge (13, 14), comprenant des cannelures.

4. Raccord rapide selon la revendication 1, caractérisé en ce que les moyens de positionnement sont des trous de centrage (15) ou des fentes fraisées (16) coopérant avec trois ou plus de trois billes.

Fig 1

Fig. 2

6

10

9

8

7

4

5

3

2

1

Fig. 3

Fig. 4

14

13

Fig. 5